# EUROPÄISCHE PATENTSCHRIFT

(11) **EP 0 610 734 B1**
(45) Veröffentlichungstag und Bekanntmachung des Hinweises auf die Patenterteilung: **02.01.1997**
(21) Anmeldenummer: 94101226.2
(22) Anmeldetag: 28.01.1994
(51) Int. Cl.: C08G 18/08

(54) **Verwendung von flüssigen, ungesättigten Kohlenwasserstoffen als Zellöffner bei der Herstellung von Urethan- und/oder Isocyanuratgruppen aufweisenden Hartschaumstoffen**
The use of liquid, unsaturated hydrocarbons as cell openers for preparing rigid foams containing urethane and/or isocyanurate groups
Utilisation d'hydrocarbures insaturés liquides en tant qu' agent d'ouverture des alvéoles dans la production de mousses rigides contenant des groupes urethane et/ou isocyanurate

(30) Priorität: 10.02.1993 DE 4303809
(43) Veröffentlichungstag der Anmeldung: 17.08.1994
(73) Patentinhaber: Th. Goldschmidt AG, D-45127 Essen (DE)
(72) Erfinder: Burkhart, Georg, Dr., D-45239 Essen (DE); Schator, Helmut, D-45144 Essen (DE)

(56) Entgegenhaltungen:
- EP-A- 0 367 071
- DE-A- 2 609 355
- DATABASE WPIL, Nr. 78-201 33A, DERWENT PUBLICATIONS LTD., London; & JP-A-50 149 794 (JAPAN SODA K.K.)

## Beschreibung

Die Erfindung betrifft die Verwendung von flüssigen, ungesättigten Kohlenwasserstoffen, welche frei von mit Isocyanaten reaktiven Gruppen sind, als Zellöffner bei der Herstellung von Urethan- und/oder Isocyanuratgruppen aufweisenden Hartschaumstoffen.

Polyurethanhartschäume werden entsprechend dem Stand der Technik aus Polyolen mit im Mittel mindestens drei Hydroxylgruppen je Molekül, mindestens difunktionellen Isocyanaten, Katalysatoren, Treibmitteln und Polysiloxan-Polyoxyalkylen-Blockmischpolymerisaten als Schaumstabilisatoren sowie gegebenenfalls üblichen Zusatzstoffen hergestellt.

Eine zusammenfassende Darstellung der verwendbaren Rohstoffe und der anwendbaren Verfahren ist in Ullmann "Enzyklopädie der technischen Chemie", 1980, Band 19, Seiten 301 bis 341, und "Kunststoffhandbuch", Band VII, Polyurethane, von G. Oertel, Carl Hanser Verlag, München, 1983, Seiten 246 bis 331, zu finden.

Im allgemeinen verwendet man Polyetherole oder Polyesterole mit im Mittel mindestens drei Hydroxylgruppen je Molekül, wobei die OH-Zahl der Polyole im allgemeinen zwischen 100 und 800 liegt.

Als Treibmittel werden vorzugsweise halogenierte Kohlenwasserstoffe mit Siedepunkten unterhalb 50°C oder auch Wasser sowie Kombinationen aus beiden eingesetzt. Das Wasser reagiert mit dem Isocyanat unter Abspaltung von Kohlendioxid und Bildung von Polyharnstoff. Die entstehenden Formkörper sind im allgemeinen geschlossenzellig. Das Raumgewicht der Hartschaumstoffe liegt zwischen 5 bis 1000 kg/m³, bevorzugt zwischen 10 und 400 kg/m³, besonders bevorzugt zwischen 20 bis 60 kg/m³.

Stellt man Hartschäume mit niedrigeren Raumgewichten etwa unter 23 kg/m³ her, erfolgt meist ein Schrumpf, d.h. das Zellgerüst kann bei geschlossenen Zellen dem äußeren Luftdruck nicht mehr standhalten. Dieser Schrumpf wird noch durch die Diffusion des Kohlendioxids durch die intakten Zellmembranen hindurch in Richtung der Oberfläche des Schaumkörpers unterstützt, da hierdurch ein Unterdruck in den Zellen entsteht.

Will man einen dimensionsstabilen, sehr leichten Polyurethanhartschaum herstellen, so ist es notwendig, durch geeignete Maßnahmen eine ausreichende Offenzelligkeit zu erzeugen. Hierfür verwendet man entsprechend dem Stand der Technik überschüssige Mengen an Wasser, für die keine entsprechende Isocyanatmenge zur Verfügung steht. Das überschüssige Wasser verdampft bei Erreichen des Siedepunktes und reißt die Zellmembranen ein, wenn man nicht übermäßig stabilisiert.

Eine besondere Form von Polyurethanhartschäumen sind die sogenannten Ein-Komponenten-Schäume. Sie werden insbesondere zum Verbinden und Ausfüllen von Werkteilen, Türen, Türzargen oder Hohlräumen in Bauten oder Kraftfahrzeugen eingesetzt. Dabei werden in der Regel die Schaumkomponenten aus einem Druckbehälter, z.B. einer Aerosoldose, in die auszufüllenden Hohlräume gespritzt, wobei das Reaktionsgemisch vom expandierenden Treibgas aufgebläht wird. Der entstandene Schaum verfestigt sich durch die Reaktion der Isocyanatgruppen mit der Luftfeuchtigkeit zu einem formstabilen Schaum.

Derartige Ein-Komponenten-Polyurethanschaum-Systeme sind in der Patentliteratur beschrieben, wobei stellvertretend auf die DE-PS 30 49 834 und die DE-OS 38 29 104 verwiesen wird.

Eine wichtige Bedingung für die technische Verwendbarkeit der erhaltenen Ein-Komponenten-Schäume ist die Forderung der Formstabilität. Der Schaum darf bei Einwirkung von Luftfeuchtigkeit, bei Temperatur- oder Luftdruckwechsel seine ursprüngliche Form nicht verändern. Da Wasserdampf und Kohlendioxid leicht durch die Zellwände des Schaumes diffundieren, zieht sich der Schaum zusammen, wenn die umgebende Atmosphäre einen niedrigeren Wasserdampf- und/oder Kohlendioxidgehalt als die Zellräume aufweist. Umgekehrt kann der Schaum durch erhöhte Aufnahme von Wasserdampf und/oder Kohlendioxid aus der umgebenden Atmosphäre expandieren. In gleicher Weise kann der Schaum auf Druckunterschiede der Atmosphäre reagieren.

Es hat nicht an Versuchen gefehlt, die Formstabilität von Polyurethanhartschäumen im allgemeinen und von Ein-Komponenten-Schäumen im besonderen zu verbessern. Diese Verbesserung gelingt durch zumindest teilweise Öffnung der Zellen des sich bildenden Polyurethanhartschaumes.

Die Herstellung formstabiler Polyurethanhartschäume ist Gegenstand der DE-PS 39 28 867. Die Aufgabe wird dabei gelöst durch die Verwendung von Polysiloxan-Polyoxyalkylen-Blockmischpolymerisaten, welche mindestens eine an ein Siliciumatom gebundene aminofunktionelle Gruppe der allgemeinen Formel 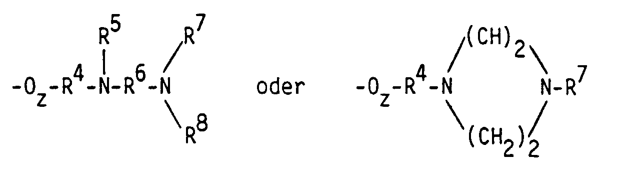 aufweisen, wobei
- R⁴: ein zweiwertiger Rest,
- R⁵: ein Wasserstoff- oder Alkylrest mit 1 bis 4 Kohlenstoffatomen, ein Polyetherrest der Formel -(C_{q}H_{2q}O)₂R⁹ (q = 2, 3 oder 4; r = 1 bis 100; R⁹ = Wasserstoff- oder Alkylrest mit 1 bis 4 Kohlenstoffatomen) oder der Rest 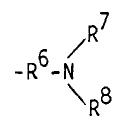 ist,
- R⁶: ein zweiwertiger aliphatischer Kohlenwasserstoffrest mit 2 bis 6 Kohlenstoffatomen oder ein zweiwertiger aromatischer Kohlenwasserstoffrest ist,
- R⁷ und R⁸: Alkylreste mit 1 bis 4 Kohlenstoffatomen, die eine OH-Gruppe aufweisen können oder gemeinsam Bestandteil eines 5- oder 6gliedrigen Ringes, der ein Sauerstoff- oder Stickstoffatom enthalten kann, sind und
- z: einen Zahlenwert von 0 oder 1 hat,
als Mittel zur zumindest teilweisen Zellöffnung von sonst geschlossenen Zellen enthaltenden Polyurethanhartschäumen in Mengen von etwa 0,2 bis 5 Gew.-%, bezogen auf Polyol oder Isocyanatgruppen aufweisendes Prepolymer.

Die genannten Produkte besitzen neben ihren zellöffnenden Eigenschaften aber auch noch eine stabilisierende Wirkung, so daß sie nur in engen Konzentrationsbereichen und nicht allgemein einsetzbar sind.

Auch bei den sogenannten Ein-Komponenten-Polyurethanschäumen hat man versucht, die Formstabilität der entstandenen Schäume durch entsprechende zellöffnende Zusätze zu verbessern. Hierzu ist insbesondere auf die DE-PS 31 22 790 zu verweisen. In dieser Patentschrift ist ein Verfahren zur Herstellung solcher Ein-Komponenten-Polyurethanschäume beschrieben, wobei man dem Gemisch zur Erhöhung der Formstabilität des ausgehärteten Schaumes bei seiner Herstellung 0,015 bis 0,1 Gew.-% eines Dimethylpolysiloxans mit einer dynamischen Viskosität zwischen 20 und 300 000 mm² . sec⁻¹ oder eines perfluorierte Alkylgruppen enthaltenden Polysiloxans mit einer dynamischen Viskosität zwischen 100 und 10 000 mm² . sec⁻¹, bezogen auf die Polyester und/oder Polyether und die Hilfsstoffe, zusetzt.

Tatsächlich weisen die gemäß der DE-PS 31 22 790 hergestellten Schäume eine verbesserte Formstabilität auf. Es hat sich jedoch gezeigt, daß zum Erhalt des gewünschten Effektes sehr enge Grenzen für den Zusatz der Polysiloxane einzuhalten sind. Ist der Zusatz der Polysiloxane zu gering, tritt der gewünschte Effekt nicht oder unvollständig auf. Überschreitet man aber die erforderlichen Mengen, beeinflussen die Polysiloxane die Schaumbildung in unerwünschter Weise, so daß es zu Schaumstörungen, in Grenzfällen sogar zum Kollaps des entstehenden Schaumes kommt. Der sogenannte Verarbeitungsspielraum ist unerwünscht eng. Diese Beobachtungen gelten auch ganz allgemein für Polyurethanhartschäume, die nicht durch das spezielle Verfahren der Ein-Komponentenverschäumung, sondern wie eingangs beschrieben, auf konventionelle Weise hergestellt werden.

Die Erfindung befaßt sich deshalb mit dem technischen Problem, die Formstabilität von Polyurethanhartschäumen allgemein und insbesondere die Formstabilität von Ein-Komponenten-Polyurethanschäumen durch Zusatz von zellöffnenden Modifizierungsmitteln zu verbessern, jedoch die bei Verwendung der bekannten Polysiloxane zu beobachtenden Nachteile zu vermeiden. Insbesondere soll der Verarbeitungsspielraum der Rezeptur erweitert sein.

Erfindungsgemäß gelingt dies durch die Verwendung von flüssigen, ungesättigten Kohlenwasserstoffen mit einem mittleren Molekulargewicht von 800 bis 10 000 g/Mol, welche frei von mit Isocyanaten reaktiven Gruppen sind, als Zellöffner bei der Herstellung von Urethan- und/oder Isocyanuratgruppen aufweisenden Hartschaumstoffen mit mindestens 30 % offenen Zellen durch Umsetzung von Polyisocyanaten mit Verbindungen mit mindestens zwei gegenüber Isocyanaten reaktiven Gruppen, deren Äquivalentgewicht je reaktiver Gruppe 9 bis 800 beträgt, in Gegenwart von Katalysatoren, oberflächenaktiven Substanzen sowie gegebenenfalls physikalischen Treibmitteln, Flammschutzmitteln und weiteren bekannten Hilfs- und Ausrüstungsmitteln, wobei die Umsetzung in Gegenwart der obigen Kohlenwasserstoffe in Mengen von 0,01 bis 3,0 %, bezogen auf den Reaktionsansatz, erfolgt.

Es werden als flüssige, höhermolekulare, ungesättigte Kohlenwasserstoffe, welche frei von mit Isocyanaten reaktiven Gruppen sind, vorzugsweise Polybutadien oder Polyoctenylen in Mengen von 0,01 bis 3,0 Gew.-%, bezogen auf Reaktionsansatz, verwendet.

Vorzugsweise verwendet man Polybutadien in Mengen von 0,03 bis 1,0 Gew.-%, Polyoctenylen in Mengen von 0,02 bis 0,5 Gew.-%.

Das Polybutadien und das Polyoctenylen weisen dabei zweckmäßig ein mittleres Molekulargewicht von etwa 800 bis 10 000 g/Mol auf, bevorzugt ist ein Bereich des mittleren Molekulargewichtes von etwa 1 000 bis 6 000 g/Mol, insbesondere 1 500 bis 4 000 g/Mol.

Die so erhaltenen Schaumstoffe weisen eine ausgezeichnete Formstabilität auf. Der Verarbeitungsspielraum ist weiter, als dies bisher möglich war. Die Aufschäumung des Reaktionsgemisches und die Ausbildung des Schaumes werden, ausgenommen von der erwünschten Zellöffnung, nicht oder zumindest nicht nachteilig beeinflußt. Ein weiterer Vorteil besteht in einer gewissen Hydrophobierung des erhaltenen Schaumes, welche anwendungstechnisch durchaus erwünscht ist.

Es ist zwar aus der DE-PS 38 37 351 bekannt, bei der Herstellung von Polyurethan- und/oder Polyharnstofformkörpern mit gegebenenfalls zellförmigem Kern, insbesondere bei dem sogenannten RIM-Verfahren, dem Reaktionsgemisch flüssiges Polybutadien zuzusetzen. Dort wirkt dieses aber als internes Trennmittel und verhindert ein Verkleben der Formkörper, z. B. Kotflügel, Spoiler, Schuhsohlen, mit den Wandungen der Formen, in denen sie hergestellt werden. Hieraus ließ sich aber nicht die Eignung als Zellöffner in Polyurethanhartschaum-Systemen herleiten.

Es ist ferner aus der EP-OS 0 173 004 bekannt, vibrationsdämpfenden Polyurethanschaum einer Dichte von 0,4 bis 0,75 kg/m³ unter Mitverwendung von flüssigen Polybutadienen, welche endständig Hydroxylgruppen aufweisen, herzustellen. In diesem Falle wird aber das Butadienpolyol zusammen mit üblichen Polyolen durch Reaktion mit dem Isocyanat in das Gerüst des Polyurethanschaumes eingebunden und entfaltet nicht die erfindungsgemäß angestrebte zellöffnende Wirkung. Seine Aufgabe ist vielmehr die Modifizierung der Schaumeigenschaften in bezug auf die Verbesserung der Vibrationsdämpfung.

Zur Herstellung der Polyurethanhartschäume unter erfindungsgemäßem Zusatz der nichtreaktiven, höhermolekularen, ungesättigten Kohlenwasserstoffe der angegebenen Art können die üblichen Rohstoffe, insbesondere die üblichen Polyole und Polyisocyanate eingesetzt werden.

Beispiele geeigneter Polyole sind mehrfach funktionelle Alkohole oder Amine sowie deren oxypropylierte Folgeprodukte oder auch Polyesterpolyole, die durch Veresterung mehrfach funktioneller Alkohole mit Polycarbonsäuren erhalten werden.

Beispiele geeigneter Polyisocyanate sind aromatische Polyisocyanate, insbesondere die Gemische der isomeren Toluylendiisocyanate oder Diphenylmethandiisocyanate in ihrer technisch erhältlichen Zusammensetzung.

Beispiele für Hilfsstoffe sind Weichmacher, wie Diphenylkresylphosphat, Dioctylphthalat oder Sebacinsäuredialkylester. Weitere Hilfsstoffe sind Flammschutzmittel, Farbstoffe, Katalysatoren u.ä.

Als Treibmittel mit geringer Ozonschädlichkeit eignen sich die Halogenkohlenwasserstoffe, welche im Handel unter der Bezeichnung Frigen® 22, 141b oder 142b erhältlich sind. Als Treibmittel, welche die Ozonschicht nicht schädigen, eignen sich Halogenkohlenwasserstoffe, welche im Handel unter der Bezeichnung Frigen® 134a, 152a erhältlich sind sowie Mischungen.

Es ist auch möglich, niedrigsiedende Kohlenwasserstoffe, etwa die Isomeren des Pentans oder Ether als Treibmittel zu verwenden.

Der Gegenstand der vorliegenden Erfindung wird anhand der folgenden Beispiele noch näher erläutert. Die erhöhte Offenzelligkeit der erhaltenen Schaumkörper entspricht einer verbesserten Formstabilität (< 70 % geschlossene Zellen bedeutet Dimensionsstabilität).

Dabei werden folgende Rohstoffe verwendet:
Polyol A:
   Succrose/Glycerin-gestartetes Propylenoxidpolyol mit einer OH-Zahl von 520
Polyol B:
   Glycerin-gestartetes Propylenoxidpolyol mit einer OH-Zahl von 550
System C:
   Vorformuliertes Polyol (enthält Esterpolyole) mit einem Isocyanat-Äquivalent von 1,40
Isocyanat:
   Polymeres Diphenylmethan-4,4'-diisocyanat mit einem Gehalt an Isocyanatgruppen von 31 % (rohes MDI)
Stabilisator E:
   Polysiloxan-Polyether-Blockcopolymer (Tegostab® B 8404 der Th. Goldschmidt AG)
Stabilisator F:
   Polysiloxan-Polyether-Blockcopolymer (Tegostab® B 8450 der Th. Goldschmidt AG)
Erfindungsgemäß zu verwendende Verbindung G:
   Flüssiges Polybutadien mit einem Molekulargewicht von 3000 g/Mol
Erfindungsgemäß zu verwendende Verbindung H:
   Flüssiges Polybutadien mit einem Molekulargewicht von 1800 g/Mol
Erfindungsgemäß zu verwendende Verbindung I:
   Flüssiges Polyoctenylen mit einem Molekulargewicht von 1600 g/Mol

### Beispiele 1 bis 3

Nach dem im Labor üblichen Verschäumungsverfahren werden frei steigende Probekörper mit den Grundmaßen 27,5 cm x 14 cm hergestellt. Folgende Formulierungen werden zugrunde gelegt, wobei sich die Angaben jeweils auf 100 Teile Polyol beziehen:

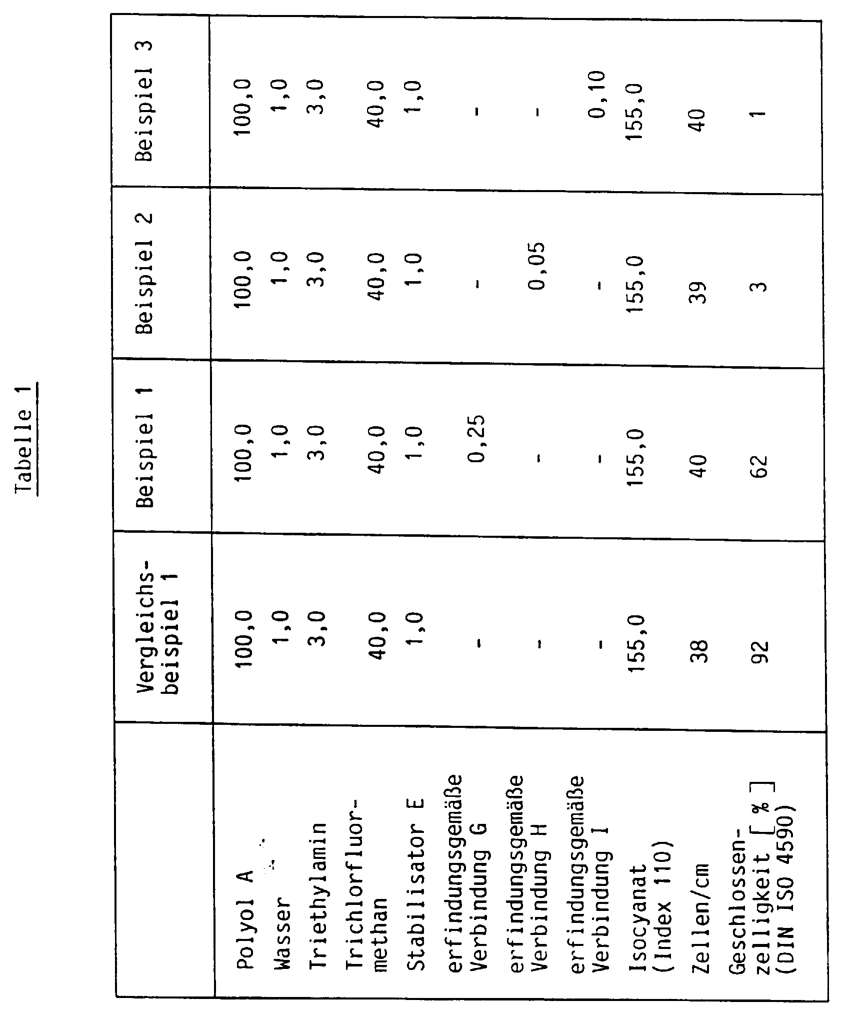

Die Beispiele 1, 2 und 3 belegen die zellöffnende Wirkung der erfindungsgemäßen Verbindungen in frei steigenden Polymethanhartschäumen.

### Beispiele 4 bis 7

Die Probekörper werden nach den im Labor üblichen Verfahren zur Herstellung von Hartschaumstoffen in einer nach oben offenen L-Form produziert. Diese Form hat die Maße: Länge 27 cm + 110 cm, Breite 14 cm, Dicke 3,5 cm und ist auf 40°C temperiert. Das zu verschäumende Reaktionsgemisch wird in den unteren Teil der Form eingebracht und expandiert.

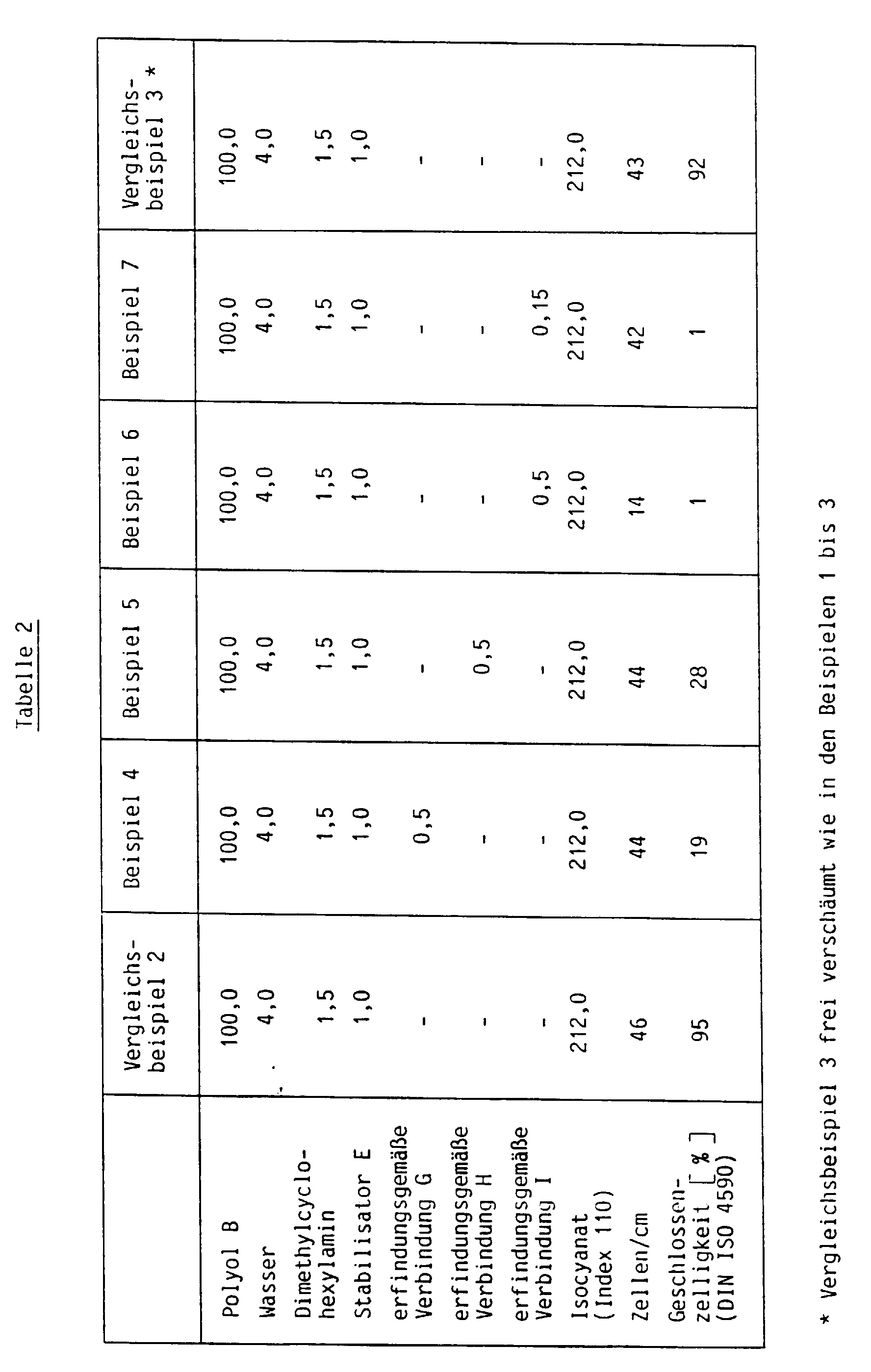

Die Beispiele 4 bis 7 dokumentieren, daß die zellöffnende Wirkung der erfindungsgemäßen Verbindungen auch in rein Wasser getriebenen Formulierungen vorhanden ist. Darüber hinaus zeigt sich der erfindungsgemäße Effekt auch bei der Verschäumung in Formen. Einsatzkonzentrationen der erfindungsgemäßen Verbindungen, die wesentlich über der zur Erzielung der Zellöffnung notwendigen Menge liegen, führen zur Zellvergröberung (Beispiel 6 und 7).

### Beispiele 8 bis 11

Die Verschäumungen gemäß Beispiele 8 und 9 und Vergleichsbeispiel 4 erfolgen in einer nach oben offenen Form, wie in den Beispielen 1 bis 3 beschrieben.

In den Beispielen 10 und 11 und in dem Vergleichsbeispiel 5 wird die gleiche Formulierung zur Herstellung von Hartschaumstoffen in einer Form mit den Maßen 50 cm x 50 cm x 5 cm eingesetzt. Das zu verschäumende Gemisch wird in die horizontal angeordnete Form eingetragen und anschließend die Form in vertikaler Anordnung fixiert.

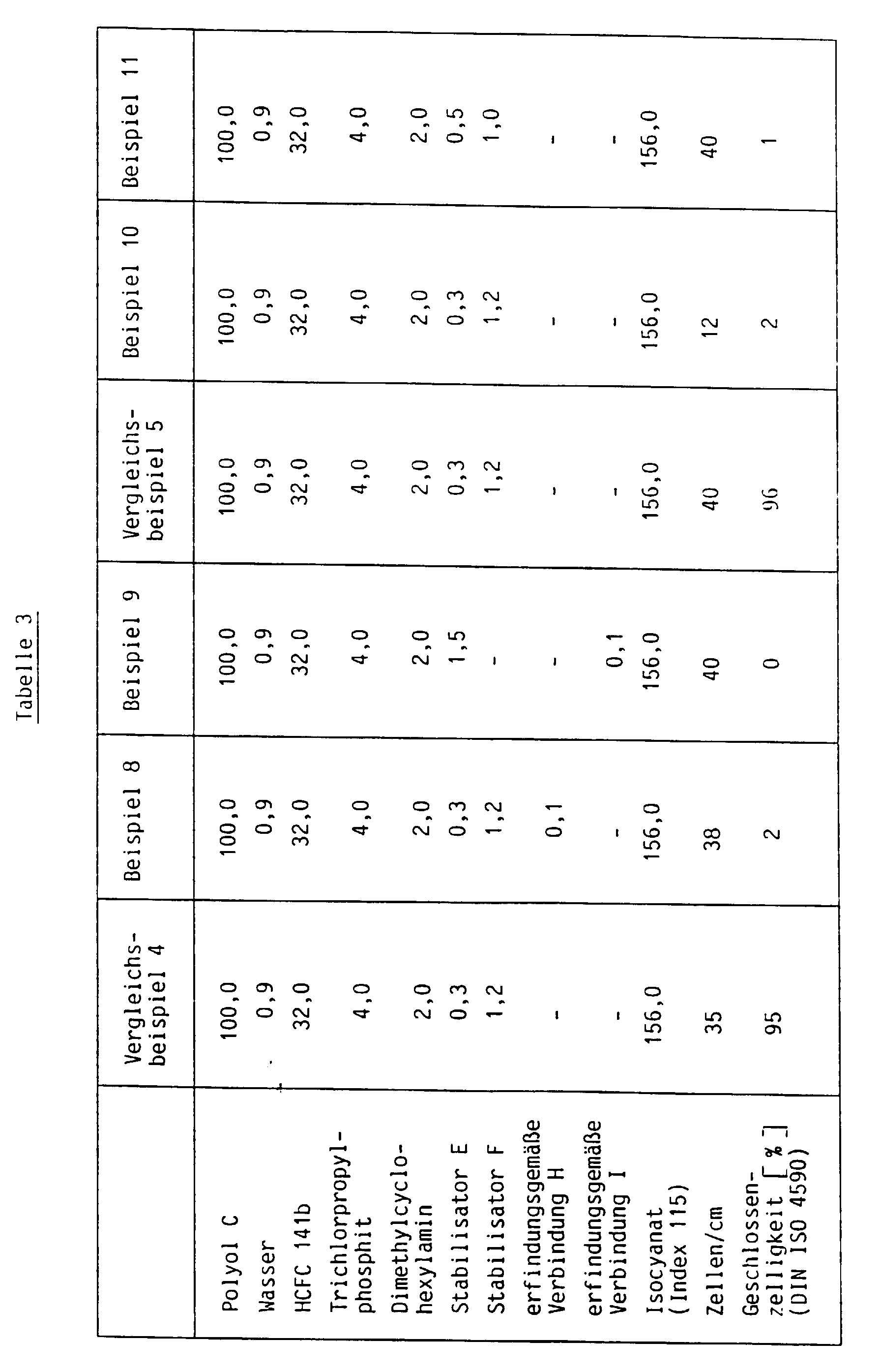

Durch die Beispiele 8 bis 11 wird die zellöffnende Wirkung der erfindungsgemäßen Verbindungen in Formulierungen, die mit HCFC 141b aufgetrieben werden, deutlich. Es zeigt sich erneut die Wirksamkeit in der Formverschäumung. In den Beispielen 10 und 11 wird die Abhängigkeit des Effektes vom verwendeten Stabilisator deutlich.

## Patentansprüche

1. Verwendung von flüssigen, ungesättigten Kohlenwasserstoffen mit einem mittleren Molekulargewicht von 800 bis 10 000 g/Mol, welche frei von mit Isocyanaten reaktiven Gruppen sind, als Zellöffner bei der Herstellung von Urethan- und/oder Isocyanuratgruppen aufweisenden Hartschaumstoffen mit mindestens 30 % offenen Zellen durch Umsetzung von Polyisocyanaten mit Verbindungen mit mindestens zwei gegenüber Isocyanaten reaktiven Gruppen, deren Äquivalentgewicht je reaktiver Gruppe 9 bis 800 beträgt, in Gegenwart von Katalysatoren, oberflächenaktiven Substanzen sowie gegebenenfalls physikalischen Treibmitteln, Flammschutzmitteln und weiteren bekannten Hilfs- und Ausrüstungsmitteln, wobei die Umsetzung in Gegenwart der obigen Kohlenwasserstoffe in Mengen von 0,01 bis 3,0 %, bezogen auf den Reaktionsansatz, erfolgt.

## Claims

1. Use of liquid, unsaturated hydrocarbons having a mean molecular weight of from 800 to 10,000 g/mol, which are free of groups reactive towards isocyanates, as cell openers for producing rigid foams containing urethane and/or isocyanurate groups and at least 30 % of open cells, by reacting polyisocyanates with compounds containing at least two groups reactive towards isocyanates and having an equivalent weight per reactive group of from 9 to 800, in the presence of catalysts, surface-active substances and, if desired, physical blowing agents, flame retardants and further known auxiliaries and additives, wherein the reaction is carried out in the presence of from 0.01 to 3.0 %, based on the reaction mixture, of the above hydrocarbons.

## Revendications

1. Utilisation d'hydrocarbures insaturés liquides ayant un poids moléculaire moyen de 800 à 10 000 g/mole, qui ne contiennent pas de groupes aptes à réagir avec des isocyanates, comme agents d'ouverture d'alvéoles lors de la fabrication de mousses rigides contenant des groupes d'uréthane et/ou des groupes isocyanurates avec au moins 30 % d'alvéoles ouverts, par réaction de polyisocyanates avec des composés contenant au moins deux groupes aptes à réagir avec les isocyanates, dont le poids d'équivalent par groupe réactif'est de 9 à 800, en présence de catalyseurs, de substances tensio-actives, ainsi qu'éventuellement d'agents moussants physiques, d'agents ignifuges et d'autres agents auxiliaires et d'apprêt connus, ladite réaction ayant lieu en présence des hydrocarbures susmentionnés en des quantités de 0,01 à 3,0 % par rapport à la solution de réaction.
